# EUROPÄISCHE PATENTSCHRIFT

(11) **EP 0 646 220 B1**
(45) Veröffentlichungstag und Bekanntmachung des Hinweises auf die Patenterteilung: **08.01.1997**
(21) Anmeldenummer: 93912840.1
(22) Anmeldetag: 01.06.1993
(51) Int. Cl.: F04D 19/04, F04D 29/58

(54) **GASREIBUNGSVAKUUMPUMPE**
GAS FRICTION VACUUM PUMP
POMPE A VIDE A GAZ ET A FRICTION

(30) Priorität: 19.06.1992 DE 4220015; 11.11.1992 DE 4237972
(43) Veröffentlichungstag der Anmeldung: 05.04.1995
(73) Patentinhaber: Balzers und Leybold Deutschland Holding Aktiengesellschaft, 63450 Hanau (DE)
(72) Erfinder: SCHÜTZ, Günter, D-5000 Köln 21 (DE); SZIRMAY, Markus, D-5000 Köln 1 (DE); REIMER, Peter, D-5030 Hürth (DE)
(74) Vertreter: Leineweber, Jürgen, Dipl.-Phys.
(86) Internationale Anmeldenummer: EP9301368
(87) Internationale Veröffentlichungsnummer: WO9400694

(56) Entgegenhaltungen:
- EP-A- 0 197 238
- CH-A- 465 124
- DE-A- 2 757 599
- JOURNAL OF VACUUM SCIENCE AND TECHNOLOGY Nr. 3, Mai 1990, Seiten 2768 - 2771 , XP000147979 ENOSAWA 'High throughput tandem turbomolecular pump for extreme high vacuum.'
- PATENT ABSTRACTS OF JAPAN vol. 16, no. 458 (M-1315)24. September 1992 & JP-A-41 64 188 ( HITACHI ) 9.Juni 1992

## Beschreibung

Die Erfindung bezieht sich auf eine Gasreibungsvakuumpumpe dieses Verfahrens geeignete Gasreibungsvakuumpumpe mit einem Hochvakuum (HV)-bereich und einen Vorvakuum (VV)-bereich sowie mit einer Kühlung, wobei die Kühlung in den HV-Bereich engeleitet wird.

Vakuumpumpen, die mit hoher Rotordrehzahl betrieben werden, sind beispielsweise Turbovakuumpumpen (axial, radial) oder Molekularpumpen, insbesondere Turbomolekularpumpen. Molekularpumpen, Turbomolekularpumpen und Kombinationen davon gehören zur Gattung der Gasreibungsvakuumpumpen. Die pumpaktiven Flächen einer Molekularpumpe werden von den einander zugewandten Flächen eines Rotors und eines Stators gebildet, wobei der Rotor und/oder der Stator mit einer gewindeähnlichen Struktur ausgerüstet sind. Turbumolekularpumpen weisen - ähnlich wie eine Turbine - Rotor- und Statorschaufeln auf, welche die pumpaktiven Flächen bilden. Die auf der Eintrittsseite befindlichen pumpaktiven Flächen bilden den Hochvakuum (HV) -bereich. Die der Austrittsseite benachbaren pumpaktiven Flächen werden mit Vorvakuum (VV) -bereich bezeichnet. Kombinierte Gasreibungspumpen sind in der Regel im HV-Bereich als Turbomolekularpumpe und im VV-Bereich als Molekularpumpe ausgebildet.

Gasreibungsvakuumpumpen der beschriebenen Art sind für die Erzeugung eines Hochvakuums (ab 10-3 mbar und weniger) geeignet. Sie benötigen eine sich an den VV-Bereich anschließende Vorvakuumpumpe, z.B. eine Drehschieberpumpe.

Pumpen der beschriebenen Art werden immer häufiger zur Evakuierung von Kammern oder Rezipienten eingesetzt, in denen chemische Prozeße, wie Beschichtungs- oder Ätzprozeße usw., ablaufen. Bei derartigen Applikationen fallen relativ große Gasmengen an, die bei gleichzeitiger Aufrechterhaltung des erforderlichen Vakuums von der Gasreibungsvakuumpumpe abgefördert werden müssen. Große Gasmengen bedeutet für die pumpaktiven Flächen eine hohe thermische Belastung. Auch der Antriebs motor und die Rotorlagerungen - seien sie als Wälzlager oder als Magnetlager ausgebildet - tragen zur Wärmeerzeugung bei. Schließlich kann bei den geschilderten Einsätzen das Prozeßgas selbst warm sein. Bei den in chemischen Prozeßen eingesetzten Gasreibungsvakuumpumpen ist es deshalb erforderlich, diese in an sich bekannter Weise mit einer Kühlung auszurüsten.

Bei den geschilderten Einsatzfällen besteht das Problem der Feststoff-Belastung der Gasreibungsvakuumpumpe. Die Bildung und Abscheidung von Feststoffen kann aufgrund chemischer Reaktionen von Bestandteilen der abzupumpenden Gase untereinander, durch Reaktionen von Gasbestandteilen an den pumpaktiven Flächen und/oder durch kathalytische Effekte erfolgen. Die Abscheidung von Feststoffen führt zu Schichtbildungen, die insbesondere in Vakuumpumpen mit kleinen Spalten sehr bald Verengungen der Spalte und damit eine Abnahme der Leistung der Pumpe zur Folge haben. Auch Abrasionen, Spielaufzehrungen usw. treten auf, die mit erhöhten Verschleißerscheinungen einhergehen und damit zu reduzierten Standzeiten führen.

Aus JOURNAL OF VACUUM SCIENCE AND TECHNOLOGY Nr. 3, Mai 1990, Seiten 2768-2771 ist eine Tandem-Turbomolekularvakuumpumpe gemäß dem Oberbegriff des Patentanspruchs 1 bekannt. Sie besteht aus zwei übereinander angeordneten Turbomolekularvakuumpumpen. Die hochvakuumseitig angeordnete Turbomolekularvakuumpumpe ist in ihrem vorvakuumseitigen Bereich mit einer Kühlung ausgerüstet.

Der vorliegenden Erfindung liegt die Aufgabe zugrunde, eine Gasreibungsvakuumpumpe der eingangs erwähnten Art derart zu gestalten, daß die geschilderten, mit dem Einsatz der Pumpe bei chemischen Prozessen verbundenen Feststoffbildungs-Probleme weitestgehend beseitigt sind.

Diese Aufgabe wird dadurch gelöst, daß die VV-Seite der Pumpe mit einer Heizung ausgerüstet ist, so daß während des Betriebs der Pumpe ihr HV-Bereich und ihr VV-Bereich unterschiedliche Betriebstemperaturen haben, und zwar derart, daß die Temperatur des HV-Bereiches niedriger ist als die Temperatur des VV-Bereichs. Im Gegensatz zum üblichen Betrieb von Turbomolekularvakuumpumpen, bei denen eine Kühlung von der VV-Seite her erfolgt, nimmt die Pumpe im Bereich der VV-Seite eine höhere Betriebstemperatur an als auf der HV-Seite. Diese Maßnahme beruht auf der Erkenntnis, daß niedrige Temperaturen im HV-Bereich die Bildung von Feststoffen wegen des geringen Drucks noch nicht begünstigen. Von Bedeutung ist es, daß die pumpaktiven Flächen im VV-Bereich wärmer sind als im HV-Bereich, da die Feststoffbildung mit zunehmendem Druck und abnehmender Temperatur begünstigt wird. Da bei erfindungsgemäß ausgebildeten Gasreibungsvakuumpumpen neben dem Druck auch die Temperatur zunimmt, kommt es innerhalb der Gasreibungspumpe nicht oder nur kaum zu den befürchteten Feststoffbildungen.

Da insbesondere bei magnetgelagerten Gasreibungspumpen der Motor und seine Lagerungen nur einen unwesentlichen Beitrag zur thermischen Belastung der Vakuumpumpe liefern, ist es besonders zweckmäßig, im Vorvakuum-Bereich eine Heizung vorzusehen, um die in diesem Bereich gewünschten, relativ hohen Betriebstemperaturen aufrechtzuerhalten. Es muß lediglich sichergestellt sein, daß die oberen Temperaturgrenzen der im VV-Bereich befindlichen Bauteile - Motor, Magnetmaterial, Wälzlager, Rotorschaufeln (Fliehkraftfestigkeit) usw. - nicht überschritten werden. Nur dann, wenn im VV-Bereich zu hohe Temperaturen auftreten, ist auch im VV-Bereich eine Kühlung notwendig. Die Wirkung dieser Kühlung muß so gering gewählt werden, daß das gewünschte Temperaturprofil im Sinne der vorliegenden Erfindung erhalten bleibt.

Um das gesetzte Ziel zu erreichen, kann es weiterhin zweckmäßig sein, einen Wärmeleitwiderstand zwischen dem HV-Bereich und dem VV-Bereich der erfindungsgemäßen Gasreibungsvakuumpumpe vorzusehen. Durch diesen Widerstand wird erreicht, daß die Wirkung der in den HV-Bereich eingeleiteten Kühlung im VV-Bereich begrenzt ist, so daß dort die gewünschten, relativ hohen Temperaturen aufrecht erhalten werden können. Sind sowohl im HV-Bereich eine Kühlung als auch im VV-Bereich eine Heizung vorgesehen, dann verhindert der Wärmeleitwiderstand einen unnötigen Temperaturausgleich und damit eine wirtschaftliche Aufrechterhaltung des Temperaturgefälles.

Zu Vakuumpumpen der hier betroffenen Art (vgl. z.B. EU-A-464 571) gehört üblicherweise ein Wandler, der mit einem Leistungsteil, mit einem Steuerteil sowie mit Bedienungselementen ausgerüstet ist. Der Leistungsteil umfaßt u.a. einen Transformator, der der Umformung bzw. Wandlung der Netzspannung auf vom Antriebsmotor benötigte Spannungen dient. Vakuumpumpe und Wandler sind über ein Kabel miteinander verbunden.

Eine weitere Lösung der erfindungsgemäßen Aufgabe besteht darin, daß der zur Stromversorgung des Antriebsmotors gehörende Transformator im Bereich der Austrittsseite an der Vakuumpumpe befestigt ist. Ein Vorteil dieser Maßnahme besteht zunächst darin, daß die Baugröße des Wandlers um etwa 50 % reduziert werden kann. Die Befestigung des Transformators an der Vakuumpumpe kann derart erfolgen, daß vorhandener Bauraum ausgenutzt werden kann, Durchmesser oder Höhe der Pumpe also nicht oder nur unwesentlich verändert werden müssen. Ein weiterer wesentlicher Vorteil besteht darin, daß die Abwärme des Transformators dazu verwendet werden kann, die Pumpe austrittsseitig zu beheizen. Dadurch wird erreicht, daß die pumpaktiven Flächen im VV-Bereich wärmer sind als im HV-Bereich. Bei einer erfindungsgemäß ausgebildeten Gasreibungsvakuumpumpe nimmt deshalb - von der Eintrittsseite zur Austrittsseite - neben dem Druck auch die Temperatur zu, so daß es innerhalb der Gasreibungspumpe nicht oder kaum zu den befürchteten Feststoffbildungen kommt. Insbesondere bei Pumpen mit magnetgelagerten Rotoren, bei denen der Motor und seine Lagerungen nur einen unwesentlichen Beitrag zur thermischen Belastung der Vakuumpumpe liefern, ist der Einsatz der Erfindung von Bedeutung. Es muß lediglich sichergestellt sein, daß die oberen Temperaturgrenzen der im VV-Bereich befindlichen Bauteile - Motor, Magnetmaterial, Wälzlager, Rotorschaufeln (Fliehkraftfestigkeit) usw. - nicht überschritten werden.

Sollte die Gefahr bestehen, daß im VV-Bereich zu hohe Temperaturen auftreten, dann ist es zweckmäßig, zusätzlich eine Kühlung, und zwar eine in den HV-Bereich der Pumpe eingeleitete Kühlung, vorzusehen. Die Wirkung dieser Kühlung muß so gering gewählt werden, daß das gewünschte Temperaturprofil im Sinne der vorliegenden Erfindung erhalten bleibt.

Weitere Vorteile und Einzelheiten der Erfindung sollen anhand von in den Figuren 1 bis 3 dargestellten Ausführungsbeispielen erläutert werden. Es zeigen
- Figur 1 eine erfindungsgemäß ausgebildete Turbomolekularvakuumpumpe mit einer Luftkühlung,
- Figur 2 eine Turbomolekularvakuumpumpe mit einer Flüssigkeitskühlung und
- Figur 3 einen Schnitt durch eine Turbomolekularvakuumpumpe mit einem Wandler.

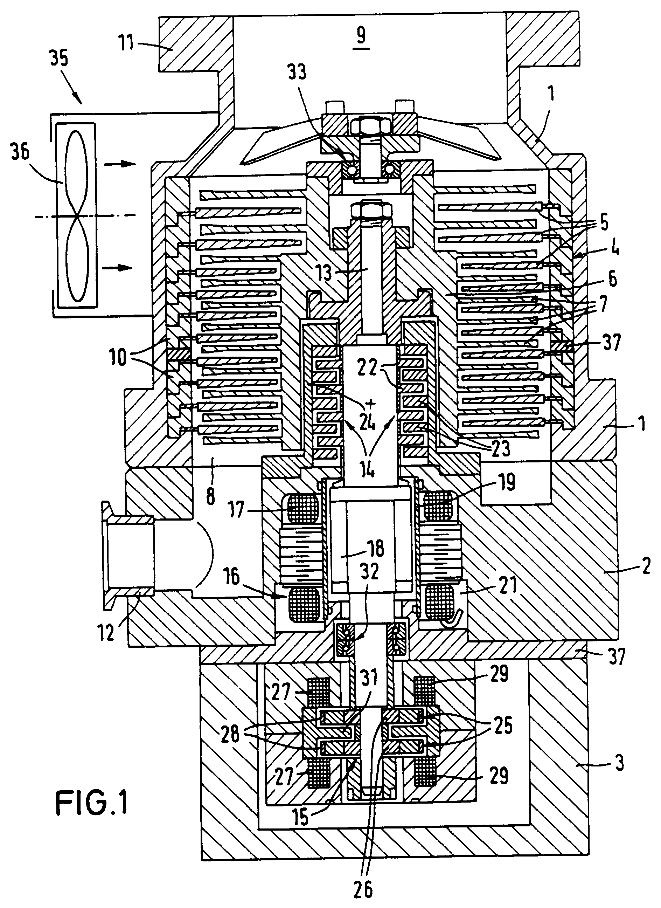

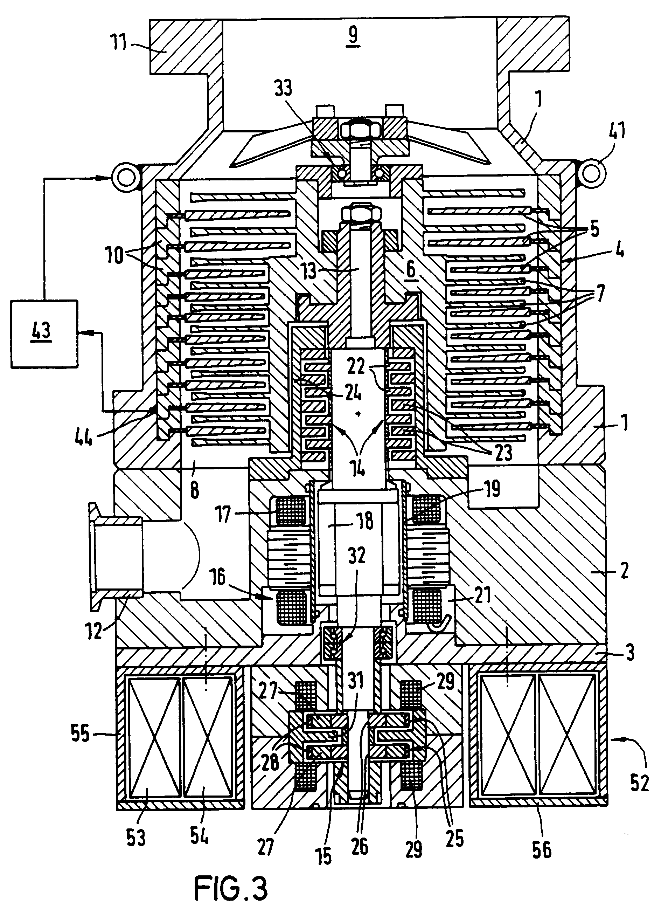

Die in den Figuren 1 bis 3 dargestellte Turbomolekularpumpe weist das Gehäuseteil 1 sowie die Basisteile 2 und 3 auf. Das Gehäuseteil 1 umgibt den Stator 4. Der Stator 4 besteht aus mehreren Distanzringen 10, zwischen denen die Statorschaufeln 5 gehaltert sind. Die Statorschaufeln 5 und die am Rotor 6 befestigten Rotorschaufeln 7 sind wechselnd in Reihen angeordnet und bilden den ringförmigen Gasförderkanal 8. Der Gasförderkanal 8 verbindet den Einlaß 9 der Pumpe (Eintrittsseite, HV-Bereich), gebildet vom Anschlußflansch 11, mit dem Auslaß 12, an den üblicherweise eine Vorvakuumpumpe angeschlossen ist (Austrittsseite, VV-Bereich).

Der Rotor 6 ist auf einer Welle 13 befestigt, die sich ihrerseits über Magnetlagerungen 14 und 15 im Gehäuse der Pumpe abstützt. Zwischen den beiden Magnetlagerungen 14 und 15 befindet sich der Antriebsmotor 16, der von der Spule 17 und dem mit der Welle 13 rotierenden Anker 18 gebildet wird. Der Antriebsmotor 16 ist als Spaltrohrmotor ausgebildet. Das zwischen Spule 17 und Anker 18 angeordnete Spaltrohr ist mit 19 bezeichnet. Die Spule 17 befindet sich in einem vom Spaltrohr und vom Gehäuseteil 3 gebildeten Raum 21, der für die von der Pumpe 1 geförderten Gase nicht zugänglich ist.

Das obere Magnetlager 14 ist als passives Magnetlager ausgebildet. Es besteht aus rotierenden Ringscheiben 22, welche auf der Welle 13 befestigt sind, und ortsfesten Ringscheiben 23, die von der Hülse 24 umgeben sind. Das weitere Magnetlager 15 ist teilweise aktiv (in axialer Wirkrichtung) und passiv (in radialer Wirkrichtung) ausgebildet. Um dieses zu erreichen, sind auf der Welle 13 Ringscheiben 25 befestigt, welche jeweils aus einem Nabenring 26, einem Permanentmagnetring 27 und einem Armierungsring 28 bestehen. Diese Armierungsringe 27 haben die Aufgabe, Zerstörungen der Permanentmagnetringe 27 infolge der hohen Fliehkräfte zu vermeiden.

Den rotierenden Permanentringen 27 sind feststehende Spulen 29 zugeordnet. Diese bilden Magnetfelder, die mit Hilfe des durch die Spulen fließenden Stromes veränderbar sind. Die Änderungen des Spulenstromes erfolgen in Abhängigkeit von Axialsensoren, welche nicht dargestellt sind.

Im Spalt zwischen den mit der Welle rotierenden Ringscheiben 25 befindet sich eine feststehende Ringscheibe 31 aus nicht magnetisierbarem Material hoher elektrischer Leitfähigkeit. Dieses Material bewirkt eine Lagerstabilisierung mit wirkungsvoller Wirbelstromdämpfung. Ein dem Magnetlager 15 entsprechendes Lager ist in der europäischen Patentschrift 155 624 offenbart.

Die in Figur 1 dargestellte Torbomolekularpumpe ist mit einer Luftkühlung 35 ausgerüstet. Bestandteil dieser Luftkühlung ist das Gebläse 36. Der vom Gebläse 36 erzeugte Kühlluftstrom ist nur auf den HV-Bereich der dargestellten Pumpe gerichtet. Die gewünschte Kühlung wird deshalb nur in diesem Bereich wirksam. Die Kühlluft kühlt zunächst den HV-seitigen Abschnitt des Gehäuses 1 und damit den HV-Bereich des dem Gehäuse 1 anliegenden Stators 4. Die Kühlung des Rotors 6 mit seinen Rotorschaufeln 7 erfolgt durch Strahlung. Die Kühlwirkung nimmt zur VV-Seite hin ab, so daß sich während des Betriebs dort höhere Temperaturen einstellen als im HV-Bereich.

Bestehen beispielsweise das Gehäuse 1 aus Edelstahl, ein schlechter Wärmeleiter, und die Statorringe 10 aus Aluminium, ein guter Wärmeleiter, dann kann es zweckmäßig sein, einen Wärmewiderstand 37 vorzusehen. Dieser ist als Ring aus schlecht wärmeleitendem Material ausgebildet und Bestandteil des Statorring-Paketes. Der Wärmewiderstand 37 trennt thermisch die HV-Seite des Stators von der VV-Seite, so daß der VV-seitige Bereich des Stators höhere Temperaturen annehmen kann.

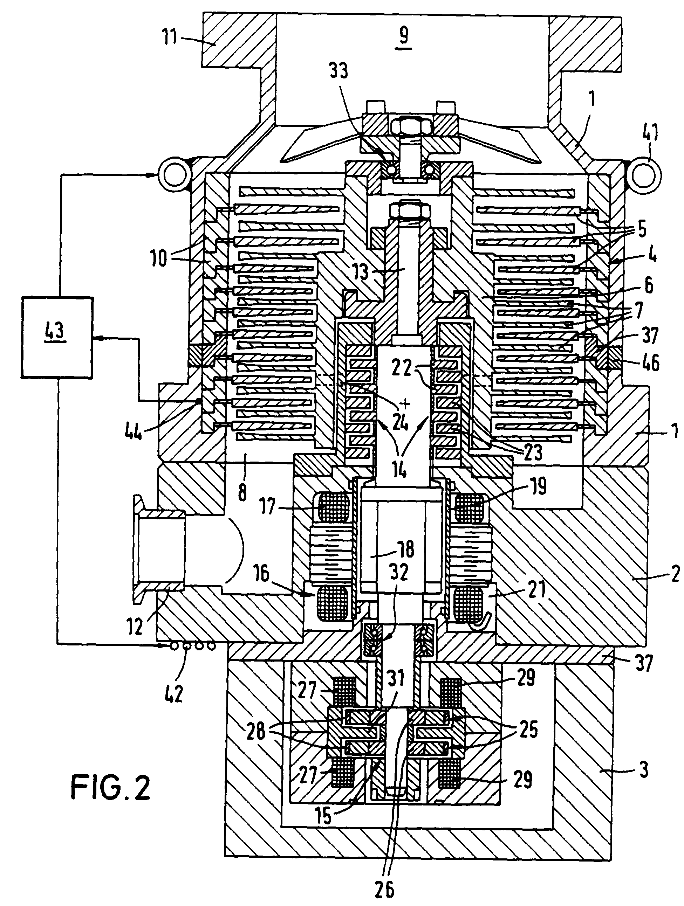

Beim Ausführungsbeispiel nach Figur 1 hat der Wärmewiderstand 37 im Querschnitt die Form eines einfachen Ringes. Durch weitere Ringe wird seine Querschnittsform zu einem Statorring 10 ergänzt. Auch ein kompletter Statorring 10 kann aus wärmeisolierendem Material bestehen und den Wärmewiderstand 37 (vgl. Figur 2) bilden. Schließlich besteht die Möglichkeit, zur Bildung des Wärmeleitwiderstandes einen Statorring stirnseitig mit einer wärmeisolierenden Schicht zu versehen.

Beim Ausführungsbeispiel nach Figur 2 ist die dargestellte Turbomolekularpumpe HV-seitig mit einem Kühlrohr 41 versehen, das mit dem Gehäuse 1 durch Löten oder Schweißen verbunden ist. Während des Betriebs ist das Rohr 41 von einem geeigneten Kühlmittel (z.B. Wasser) durchströmt. Gleichzeitig ist VV-seitig eine Heizung 42 vorgesehen, mit der die VV-Seite auf die gewünschte erhöhte Temperatur gebracht wird. Zur kontrollierten Aufrechterhaltung eines bestimmten Temperaturgefälles von der VV-Seite zur HV-Seite ist eine nur schematisch dargestellte Regeleinrichtung 43 vorgesehen. Sie regelt die Temperatur oder die Menge des durch das Kühlrohr 41 strömenden Kühlmittels und/oder den der Heizung 42 zugeführten Strom, und zwar in Abhängigkeit von Signalen, die von einem oder mehreren Temperatursensoren geliefert werden. Ein Sensor 44 ist dargestellt. Mit ihm wird die Temperatur im VV-Bereich überwacht, die unter Einhaltung der oben erwähnten Temperaturgrenzen möglichst hoch sein soll.

Beim Ausführungsbeispiel nach Figur 2 ist neben dem Wärmeleitwiderstand 37 des Stators auch das Gehäuse 1 in etwa gleiche Höhe mit einem Wärmeleitwiderstand 46 ausgerüstet. Diese Maßnahme ist erforderlich, wenn das Gehäuse 1 aus gut wärmeleitendem Werkstoff, beispielsweise Aluminium, besteht. Eine wirksame thermische Trennung der VV-Seite von der HV-Seite wird dadurch erzielt. Falls nötig, können auch der Rotor 6 und die Hülse 24 des Magnetlagers 14 mit Wärmeleitsperren (gestrichelt eingezeichnet) versehen sein.

Zu Turbomolekularvakuumpumpen der beschriebenen Art gehört ein im einzelnen nicht dargestellter Wandler mit einem Leistungsteil, einem Steuerteil sowie - in der Regel - Baugruppen zur Bedienung der Pumpe. Erfindungsgemäß ist der Transformator 52, der sonst Bestandteil des Wandlers ist, an der Pumpe befestigt, und zwar am austrittsseitig angeordneten Basisflansch 3. Der Transformator 52 (mit Primärspule 53 und Sekundärspule 54) ist ringförmig (Ringkernbauart) ausgebildet und befindet sich in einem Gehäuse 55, das der Störfeldisolierung dient und den Benutzer vor der Berührung mit spannungsführenden Teilen schützt. Durch die untere Abdeckung 56 des Gehäuses 55 ist der Transformator 52 zugänglich.

Das Gehäuse 55 ist ebenfalls ringförmig ausgebildet, umgibt das aus dem Basisflansch 3 nach unten herausragende Magnetlager 15 und hat einen Außendurchmesser, der etwa dem Gehäuseteil 2 der Pumpe entspricht. Die Abmessungen der Pumpe werden dadurch nur unwesentlich verändert, während das Bauvolumen des nicht dargestellten Wandlers erheblich abnimmt.

Das Gehäuse 55 besteht aus einem gut wärmeleitenden Werkstoff und ist mittels Schrauben am Basisflansch 3 befestigt. Die im Transformator entstehende Wärme geht damit ungehindert auf die VV-Seite der Pumpe über und bewirkt die gewünschte Temperaturerhöhung. Sollte bei anderen Applikationen diese Temperaturerhöhung des VV-Bereichs nicht erwünscht sein, dann kann eine nicht dargestellte Ringscheibe aus schlecht wärmeleitendem Material zwischen Basisflansch 3 und Gehäuse 35 eingesetzt werden.

Wesentlich ist, daß bei den eingangs erwähnten Applikationen während des Durchgangs der Gase durch die Pumpe neben dem Druck auch die Temperatur zunimmt. Es kann deshalb zweckmäßig sein, die Pumpe im HV-Bereich zu kühlen. Ein Kühlrohr 41 ist beispielsweise dargestellt. Eine Kühlung im UV-Bereich ist ebenfalls möglich, um Temperaturen schnell regeln zu können.

Zur kontrollierten Aurechterhaltung eines bestimmten Temperaturgefälles von der VV-Seite ist die nur schematisch dargestellte Regeleinrichtung 43 vorgesehen. Sie regelt die Temperatur oder die Menge des durch das Kühlrohr 41 strömenden Kühlmittels, und zwar in Abhängigkeit von Signalen, die von einem oder mehreren Temperatursensoren geliefert werden. Ein Sensor 44 ist dargestellt. Mit ihm wird die Temperatur im VV-Bereich überwacht, die unter Einhaltung der oben erwähnten Temperaturgrenzen möglichst hoch sein soll.

## Patentansprüche

1. Gasreibungsvakuumpumpe mit einem Hochvakuum (HV)-Bereich und einem Vorvakuum (VV)-Bereich sowie mit einer Kühlung (35, 41), wobei die Kühlung in den HV-Bereich eingeleitet wird, dadurch gekennzeichnet, daß ihre VV-Seite mit einer Heizung (42, 52) ausgerüstet ist, so daß während des Betriebs der Pumpe ihr HV-Bereich und ihr VV-Bereich unterschiedliche Betriebstemperaturen haben, und zwar derart, daß die Temperatur des HV-Bereichs niedriger ist als die Temperatur des VV-Bereichs.

2. Vakuumpumpe nach Anspruch 1 mit einem mit hoher Drehzahl betriebenen Rotor, mit einem Antriebsmotor für den Rotor und mit einer einen Transformator umfassenden Stromversorgung für den Antriebsmotor, dadurch gekennzeichnet, daß der Transformator (52) die Heizung bildet und im Bereich der VV-Seite an der Vakuumpumpe befestigt ist.

3. Vakuumpumpe nach Anspruch 2, dadurch gekennzeichnet, daß der Transformator (52) ringförmig ausgebildet ist und einen Außendurchmesser hat, der etwa dem Außendurchmesser des Gehäuses der Pumpe entspricht.

4. Vakuumpumpe nach Anspruch 2 oder 3, dadurch gekennzeichnet, daß der Transformator (52) lösbar an einem Basisflansch (3) der Pumpe befestigt ist.

5. Vakuumpumpe nach einem der Ansprüche 2, 3 oder 4, dadurch gekennzeichnet, daß sich der Transformator (52) in einem Gehäuse (55) aus gut wärmeleitendem Werkstoff untergebracht ist.

6. Vakuumpumpe nach einem der Ansprüche 1 bis 5, dadurch gekennzeichnet, daß sie zur thermischen Trennung der HV-Seite von der VV-Seite mit einem oder mehreren Wärmeleitwiderstanden (37,46) ausgerüstet ist.

7. Vakuumpumpe nach einem der Ansprüche 1 bis 6, dadurch gekennzeichnet, daß sie auf ihrer HV-Seite mit einer Luftkühlung (35,36) oder einer Flüssigkeitskühlung (41) ausgerüstet ist.

8. Vakuumpumpe nach einem der Ansprüche 1 bis 7, dadurch gekennzeichnet, daß eine Regeleinrichtung (43, 44) vorgesehen ist, welche die Kühlung (35, 36, 41) und/oder die Heizung (42) in Abhängigkeit von Signalen regeln, die von einem oder mehreren Temperatursensoren (44) geliefert werden.

9. Vakuumpumpe nach einem der Ansprüche 1 bis 8, dadurch gekennzeichnet, daß sie als Turbomolekularpumpe mit einem Gehäuse (1) und einem Stator (4) ausgebildet ist, der mehrere Distanzringe (10) aufweist.

10. Vakuumpumpe nach Anspruch 9 und einem der Ansprüche 6 bis 8, dadurch gekennzeichnet, daß das Gehäuse (1) und/oder der Stator (4) und/oder der Rotor (6) und/oder die Hülse (24) eines Lagers (14) mit einem Wärmeleitwiderstand ausgerüstet sind.

11. Vakuumpumpe nach Anspruch 9, dadurch gekennzeichnet, daß einer der Distanzringe (10) des Stators (4) aus schlecht wärmeleitendem Werkstoff besteht oder damit beschichtet ist.

## Claims

1. Gas friction vacuum pump with a high vacuum (HV) region and a fore vacuum (FV) region and with a cooler (35,41), wherein cooling is initiated in the HV region, characterised in that its FV side is equipped with a heater (42,52) so, during operation of the pump, its HV region and its FV region have different operating temperatures, more specifically in such a way that the temperature of the HV region is lower than the temperature of the FV region.

2. Vacuum pump according to claim 1 with a rotor operated at high speed, with a driving motor for the rotor and with a power supply comprising a transformer for the driving motor, characterised in that the transformer (52) forms the heater and is fastened on the vacuum pump in the region of the FV side.

3. Vacuum pump according to claim 2, characterised in that the transformer (52) is annular in design and has an external diameter roughly corresponding to the external diameter of the pump housing.

4. Vacuum pump according to claim 2 or 3, characterised in that the transformer (52) is detachably fastened on a base flange (3) of the pump.

5. Vacuum pump according to one of claims 2, 3 or 4, characterised in that the transformer (52) is arranged in a housing (55) made of material which is a good conductor of heat.

6. Vacuum pump according to one of claims 1 to 5, characterised in that it is equipped with one or more heat conducting resistances (37,46) for thermally separating the HV side from the FV side.

7. Vacuum pump according to one of claims 1 to 6, characterised in that it is equipped with an air cooler (35,36) or a fluid cooler (41) on its HV side

8. Vacuum pump according to one of claims 1 to 7, characterised in that a control system (43,44) is provided which controls the cooler (35,36,41) and/or the heater (42) as a function of signals delivered by one or more temperature sensors (44).

9. Vacuum pump according to one of claims 1 to 8, characterised in that it is designed as a turbomolecular pump with a housing (1) and a stator (4) having several spacer rings (10).

10. Vacuum pump according to claim 9 and one of claims 6 to 8, characterised in that the housing (1) and/or the stator (4) and/or the rotor (6) and/or the bush (24) of a bearing (14) are equipped with a heat-conducting resistance.

11. Vacuum pump according to claim 9, characterised in that one of the spacer rings (10) of the stator (4) consists of or is coated with material which is a poor conductor of heat.

## Revendications

1. Pompe à vide à friction, destinée aux gaz, comprenant une région à vide poussé (HV) et une région à vide préliminaire (VV) ainsi qu'un refroidissement (35,41), dans laquelle le refroidissement est effectué dans la région à vide poussé, caractérisée en ce que le côté du vide préliminaire est équipé d'un réchauffage (42,52), de sorte que pendant le fonctionnement de la pompe sa région à vide poussé et sa région à vide préliminaire ont des températures de fonctionnement différentes, et ceci de telle manière que la température de la région à vide poussé soit inférieure à la température de la région à vide préliminaire

2. Pompe à vide selon la revendication 1, comprenant un rotor entraîné à une vitesse de rotation élevée, avec un moteur d'entraînement pour le rotor et une alimentation électrique, comprenant un transformateur, pour le moteur d'entraînement, caractérisée en ce que le transformateur (52) forme le réchauffage et en ce qu'il est fixé dans la région à vide préliminaire sur la pompe à vide.

3. Pompe à vide selon la revendication 2, caractérisée en ce que le transformateur (52) est réalisé sous forme annulaire et présente un diamètre extérieur qui correspond approximativement au diamètre extérieur du carter de la pompe.

4. Pompe à vide selon l'une ou l'autre des revendications 2 et 3, caractérisée en ce que le transformateur (52) est fixé de façon démontable sur une bride de base (3) de la pompe.

5. Pompe à vide selon l'une des revendications 2, 3 ou 4, caractérisée en ce que le transformateur (52) est logé dans un carter (55) en matériau bon conducteur de la chaleur.

6. Pompe à vide selon l'une quelconque des revendications 1 à 5, caractérisée en ce que, pour la séparation thermique du côté à vide poussé par rapport au côté à vide préliminaire, elle est équipée d'une ou plusieurs résistances (37, 46) thermiques.

7. Pompe à vide selon l'une quelconque des revendications 1 à 6, caractérisée en ce qu'elle est équipée de son côté vide poussé, d'un refroidissement à l'air (35, 36) ou d'un refroidissement à liquide (41).

8. Pompe à vide selon l'une quelconque des revendications 1 à 7, caractérisée en ce qu'il est prévu un dispositif de réglage (43, 44) qui règle le refroidissement (35, 36, 41) et/ou le réchauffage (42) en fonction de signaux qui sont délivrés par un ou plusieurs capteurs de température (44).

9. Pompe à vide selon l'une quelconque des revendications 1 à 8, caractérisée en ce qu'elle est réalisée sous forme d'une pompe turbo-moléculaire, avec un carter (1) et un stator (4), lequel comprend plusieurs bagues d'écartement (10).

10. Pompe à vide selon la revendication 9 et l'une des revendications 6 à 8, caractérisée en ce que le carter (1) et/ou le stator (4) et/ou le rotor (6) et/ou le manchon (24) d'un palier (14) sont équipés d'une résistance thermique.

11. Pompe à vide selon la revendication 9, caractérisée en ce que l'une des bagues d'écartement (10) du stator (4) est constituée ou revêtue d'un matériau mauvais conducteur de la chaleur.
